# EUROPEAN PATENT SPECIFICATION

(11) **EP 3 124 894 B1**
(45) Date of publication and mention of the grant of the patent: **08.05.2019**
(21) Application number: 15769895.2
(22) Date of filing: 17.03.2015
(51) Int. Cl.: F24S 80/20, F24S 90/00, F24S 40/60

(54) **HEAT-MEDIUM DISCHARGE DEVICE AND HEAT-MEDIUM DISCHARGE METHOD**
HEIZMEDIUMENTLADUNGSVORRICHTUNG UND HEIZMEDIUMENTLADUNGSVERFAHREN
DISPOSITIF D'ÉVACUATION DE MILIEU CALOPORTEUR ET PROCÉDÉ D'ÉVACUATION DE MILIEU CALOPORTEUR

(30) Priority: 28.03.2014 JP 2014067607
(43) Date of publication of application: 01.02.2017
(73) Proprietor: Chiyoda Corporation, Kanagawa 220-8765 (JP)
(72) Inventor: YASUI, Makoto, Yokohama-shi Kanagawa 220-8765 (JP); YUASA, Minoru, Yokohama-shi Kanagawa 220-8765 (JP)
(74) Representative: Prüfer & Partner mbB Patentanwälte · Rechtsanwälte
(86) International application number: PCT/JP2015/057818
(87) International publication number: WO 2015/146699

(56) References cited:
- EP-A2- 0 653 596
- WO-A1-2011/024647
- WO-A1-2011/024755
- WO-A1-2012/156472
- WO-A1-2013/034587
- WO-A1-2013/034587
- DE-A1- 2 720 755
- DE-A1-102009 022 765
- FR-A2- 2 435 006
- JP-A- 2008 014 627

## Description

### Technical Field

The present invention relates to a heat-medium discharge device and a heat-medium discharge method for a solar heat collection device.

### Background Art

As an example of a system that realizes the efficient and stable electric power supply using renewable energy, a power generation plant using solar heat can be exemplified (for example, see US 2010/0043776 A and JP 2014-31787 A).

In the power generation plant using the solar heat, the solar heat is collected by a solar heat collection device, the collected heat is fed to a heat exchanger through a heat medium, water is changed into steam by the heat, and a turbine is driven by the steam to generate electric power.

The heat collected by the solar heat collection device can be stored in a heat storage device through the heat medium. Then, when the stored heat is fed again to the heat exchanger through the heat medium at a time zone such as a night in which solar rays cannot be collected, electric power can be generated. For this reason, electric power can be stably supplied.

As the heat medium used in the power generation plant, synthetic oil is generally used. However, in recent years, there has been an attempt to change the heat medium from the synthetic oil to a molten salt.

When the heat medium is changed from the synthetic oil to the molten salt, following advantages can be obtained.

First, since high-temperature steam can be supplied compared with the related art, power generation efficiency can be improved and power generation cost can be decreased. Further, in the system that uses the molten salt as the heat medium, the capacity of a heat storage tank used in the system can be decreased compared with the related art. Further, since the molten salt is used as a heat storage medium in the related art (the heat medium: synthetic oil), there is a need to exchange heat between the synthetic oil and the molten salt. However, since the entire system is moved only by the molten salt, the heat exchanger is not needed and thus the plant can have a simpler configuration.

FR 2 435 006 A2 discloses a solar heater having a water storage tank. Water is circulated through this by a pump in the return line to the solar heating panels. Hot water returns from the panels through a supply line in the top of the tank, terminating in a distributor at low level. Cold water enters at the bottom. The water does not completely fill the tank, but is kept at a given level by counter pressure inside. Water is driven off at a point below this level. A small air compressor, controlled by a level monitor, is used to maintain the pressure. The tank can be below the level of the panels. An alternative circuit is used when the tank is higher than the panels. The compressed air supply means as defined in claim 1 is not disclosed in the document.

DE 10 2009 022765 A1 discloses a solar system comprising a solar collector and a heat transfer fluid, where circulation of the heat transfer fluid is switchable through the solar collector by two valves. Two inlets and two outlets are formed between a hydraulic switch point, which is a mixing chamber. A pressure maintenance pump is arranged between a station and an integration module. The compressed air supply means as defined in claim 1 is not disclosed in the document.

Documents DE 27 20 755 A1, EP 0 653 596 A2 and WO 2013/034587 also disclose such heat-medium discharge devices.

### Summary of Invention

### Technical Problem

Incidentally, in the solar heat collection device used in the power generation plant, the solar rays are collected by a light collection mirror (a reflection mirror) to heat a heat collection pipe (a heat medium channel) and thus the temperature of the heat medium rises. A pipe for circulating the heat medium is connected to the heat collection pipe (the heat medium channel), and the heat medium channels of the plurality of solar heat collection devices are connected to the pipe.

In such a solar heat collection device, there is a need to discharge the heat medium from the heat medium channel in short time when there is concern that the heat medium flowing through the heat medium channel may be solidified due to a decrease in temperature thereof in a maintenance or power failure state.

That is, the heat medium channel which circulates the heat medium to the solar heat collection device is configured to circulate the heat medium by a pump. However, there is a case where the heat medium inside the heat medium channel is discharged, for example, for maintenance. Further, the heat medium is circulated in the heat medium channel by the pump. However, when the supply of electric power is interrupted due to a power failure or an accident or the pump is broken, the circulation of the heat medium is stopped. Here, when a molten salt having a congealing point temperature higher than an atmospheric temperature is used as the heat medium, there is a possibility that the heat medium not flowing through the heat medium channel is cooled and solidified in relatively short time. In this case, the heat medium channel is blocked by the solidified heat medium when the operation is resumed. Thus, there is a need to heat the heat medium channel to melt the heat medium. As a result, some time and cost are taken when the operation is resumed.

Further, for example, when the circulation of the heat medium having a low boiling point is stopped at a day time in fine weather, the heat medium inside the solar heat collection device is heated while not flowing therein. As a result, there is concern that the temperature of the heat medium may exceed the boiling point.

Thus, when the pump for circulating the heat medium is stopped and the pump cannot be operated again due to some reasons, there is a need to discharge the heat medium from the heat medium channel in short time.

If the tank is installed at a position lower than the solar heat collection device when the heat medium is discharged, the heat medium can be fed to the tank by gravity.

However, since the tank has a height of 15 m or more, a large hole needs to be formed in a ground in order to install the tank therein when the tank needs to be installed at a position lower than the solar heat collection device. In this case, a problem arises in that considerable time is taken for forming the hole or installing the tank.

The invention is made in view of the above-described circumstances and an object of the invention is to provide a heat-medium discharge device and a heat-medium discharge method capable of discharging a heat medium from a solar heat collection device in short time without installing a tank storing the heat medium at a position lower than the solar heat collection device.

### Solution to Problem

The above-described object is attained by the heat-medium discharge device according to claim 1 and the heat-medium discharge method according to claim 2.

According to the invention, there is provided a second heat-medium discharge device for discharging a heat medium from a heat medium channel of a solar heat collection device including the heat medium channel, the heat-medium discharge device including: a vent portion which is provided at a highest position of the heat medium channel and introduces air into the heat medium channel when the heat medium is discharged; compressed air supply means which is provided in the heat medium channel and supplies compressed air to the heat medium channel when the heat medium is discharged; an angled pipe which is connected to the heat medium channel and is inclined with respect to a horizontal plane; a drain container which is connected to a position lower than the connection portion of the heat medium channel in the angled pipe and receives the heat medium flowing from the heat medium channel through the angled pipe; and a pump which feeds the heat medium from the drain container to a tank, wherein the heat medium is molten salt, liquid metal, solution, or oil.

In the invention, when the vent portion provided at the highest position of the heat medium channel is opened so that air is introduced into the heat medium channel and compressed air is supplied from the compressed air supply means provided in the heat medium channel to the heat medium channel during the heat medium discharge operation, the heat medium flows from the heat medium channel to the angled pipe by the gravity and the pressure of the compressed air and further flows through the angled pipe by the gravity and the pressure of the compressed air to be received in the drain container. Then, the heat medium can be fed from the drain container to the tank by the pump to be stored in the tank.

Thus, it is possible to discharge the heat medium from the solar heat collection device in shorter time by the gravity and the pressure of the compressed air without installing the tank at a position lower than the solar heat collection device.

Further, according to the invention, there is provided a heat-medium discharge method of discharging a heat medium from a heat medium channel of a solar heat collection device including the heat medium channel, the heat-medium discharge method including: introducing air into the heat medium channel at a highest position of the heat medium channel and supplying compressed air to the heat medium channel during a heat medium discharge operation so that a heat medium flows to an angled pipe connected to the heat medium channel and inclined with respect to a horizontal plane; receiving the heat medium flowing through the angled pipe in a drain container connected to a position lower than the connection portion of the heat medium channel; and feeding the heat medium from the drain container to a tank by a pump, wherein the heat medium is molten salt, liquid metal, solution, or oil.

In the invention, when air is introduced into the heat medium channel at the highest position of the heat medium channel and compressed air is supplied to the heat medium channel during the heat medium discharge operation, the heat medium flows from the heat medium channel into the angled pipe by the gravity and the pressure of the compressed air and further flows through the angled pipe by the gravity and the pressure of the compressed air to be received in the drain container. Then, the heat medium can be fed from the drain container to the tank by the pump to be stored in the tank.

Thus, it is possible to discharge the heat medium from the solar heat collection device in shorter time by the gravity and the pressure of the compressed air without installing the tank at a position lower than the solar heat collection device. Advantageous Effects of Invention

According to the invention, it is possible to discharge a heat medium from a solar heat collection device in short time without installing a tank at a position lower than the solar heat collection device.

### Brief Description of Drawings

Fig. 1 is a diagram illustrating a schematic configuration of a solar heat collection system including a heat-medium discharge device.
Fig. 2 is a diagram illustrating a schematic configuration of a solar heat collection system including a heat-medium discharge device according to an embodiment of the invention.

### Description of an embodiment of the invention

Hereinafter, an embodiment of the invention will be described with reference to the drawings.

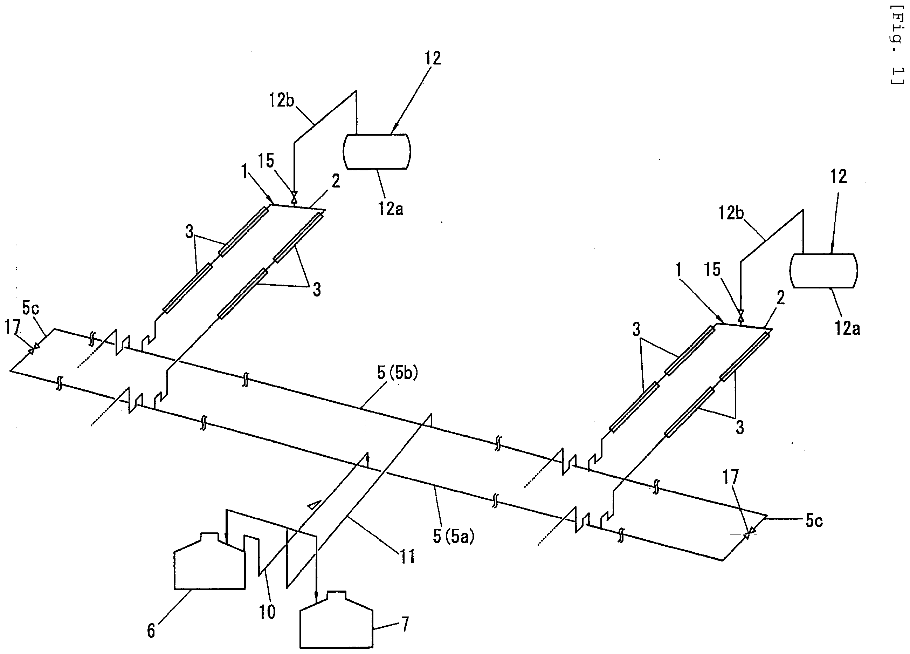

Fig. 1 illustrates a schematic configuration of a solar heat collection system including a heat-medium discharge device of a disclosure not according to the invention. The heat-medium discharge device includes a plurality of solar heat collection devices 1. Additionally, two solar heat collection devices 1 are depicted in Fig. 1, but a plurality of (for example, one hundred or more) solar heat collection devices are provided in actual.

The solar heat collection device 1 includes a substantially U-shaped heat medium channel 2 and the heat medium channel 2 is heated by solar rays collected by a light collection mirror 3 so that the temperature of a heat medium flowing through the heat medium channel 2 rises to, for example, about 290°C to 550°C.

Additionally, in the embodiment, a molten salt which is formed by a mixture of sodium nitrate and potassium nitrate is used as the heat medium.

The heat medium channel 2 of each solar heat collection device 1 is connected to the pipe 5. The pipe 5 is formed in a loop shape and includes two pipes 5a and 5b which are disposed in parallel. Here, one pipe 5a and the other pipe 5b are connected at both ends thereof by a pipe 5c. Additionally, the pipe 5c is provided with a valve 17, but the valve is normally closed. Further, the pipe 5 may be provided in substantially parallel or may be provided to be inclined with respect to the horizontal plane.

Two tanks 6 and 7 are connected to the pipe 5. The tanks 6 and 7 are respectively used to store the heat medium therein. Here, the tank 6 stores the heat medium having a temperature of about 290°C which has not been heated by the solar heat collection device 1 and the tank 7 stores the heat medium having a temperature of about 550°C and heated by the solar heat collection device 1. Thus, in the description below, the tank 6 will be referred to as a cold side tank 6 and the tank 7 will be referred to as a hot side tank 7.

The cold side tank 6 is connected to the pipe 5a by a connection pipe 10 and the heat medium is fed from the cold side tank 6 to the pipe 5a through the connection pipe 10 by a pump (not illustrated) provided in the cold side tank 6. The heat medium which is fed to the pipe 5a is branched at the connection portion between the connection pipe 10 and the pipe 5a, a part of the heat medium flows rightward along the pipe 5a, and the remaining heat medium flows leftward along the pipe 5a.

Further, the hot side tank 7 is connected to the pipe 5b by a connection pipe 11 and the heat medium heated by the solar heat collection device 1 and flowing through the pipe 5b is fed to the hot side tank 7 through the connection pipe 11 by the pressure of the pump.

Additionally, the heat medium can be branched from a halfway position of the connection pipe 11 and can be also fed to the cold side tank 6 if necessary. For example, since the heat medium cannot be heated by the solar heat collection device 1 during the night when there is no sunshine, the heat medium is fed only to the cold side tank 6 by a switching valve provided at the branch portion in that case. Accordingly, it is possible to prevent the non-heated heat medium from being fed to the hot side tank 7.

Further, one end of the heat medium channel 2 of the solar heat collection device 1 is connected to the pipe 5a and the other end thereof is connected to the pipe 5b. Thus, the heat medium which flows through the pipe 5a during a normal operation is the heat medium which has not been heated by the solar heat collection device 1 and the heat medium which flows through the pipe 5b is the heat medium which is heated by the solar heat collection device 1.

Further, a vent portion 15 which introduces air into the heat medium channel 2 during a heat medium discharge operation is provided in the highest position (the highest position in the height direction) of the heat medium channel 2 of each solar heat collection device 1.

The vent portion 15 is configured as, for example, a valve or the like. When the valve is opened during the heat medium discharge operation, air is introduced into the heat medium channel 2. Additionally, the valve may be an electromagnetic valve or a manual open/close valve, but an electromagnetic valve which can be opened or closed manually is desirable in order to open the valve when electric power is off.

Further, the heat medium channel 2 is provided with compressed air supply means 12 which supplies compressed air to the heat medium channel 2 when the heat medium is discharged. The compressed air supply means 12 includes a container 12a which stores, for example, a compressed air of predetermined pressure and a supply pipe 12b which is connected to the container 12a and the supply pipe 12b is connected to a valve constituting a vent portion 15. In this way, the heat medium channel 2 is provided with the compressed air supply means 12.

In this way, it is desirable to connect the compressed air supply means 12 to the valve constituting the vent portion 15 provided at the highest position of the heat medium channel 2, but the compressed air supply means maybe provided at a portion of the heat medium channel 2 without the vent portion 15. In this case, a valve may be provided at the connection portion between the supply pipe 12b and the heat medium channel 2 and the valve may be opened during the heat medium discharge operation to supply the compressed air to the heat medium channel 2.

In the solar heat collection system including the heat-medium discharge device with such a configuration, the heat medium is fed from the cold side tank 6 to the pipe 5a by a pump not illustrated in the drawings and is fed from the pipe 5a to the heat medium channel 2 of each solar heat collection device 1 during a normal operation. Then, the heat medium heated by the solar ray passes through the connection pipe 11 from the pipe 5b to be stored in the hot side tank 7. The heat medium stored in the hot side tank 7 is fed to the power generation system through a pipe (not illustrated) to generate electric power by a turbine. The heat medium which has been used to generate electric power and decreases in temperature is returned to the cold side tank 6 by a pipe (not illustrated). Further, the heat medium is fed again from the cold side tank 6 to the pipe 5a by a pump (not shown), the heat medium is heated by the solar heat collection device 1 as described above, and the heated heat medium is stored in the hot side tank 7. By such steps, electric power can be stably supplied.

Meanwhile, for example, when there is concern that the heat medium flowing through the heat medium channel 2 may be solidified due to a decrease in temperature thereof in a maintenance or power failure state, the heat medium is discharged from the heat medium channel 2 in this way.

First, the vent portion 15 provided at the highest position of the heat medium channel 2 of each solar heat collection device 1 is opened to introduce air into the heat medium channel 2 and compressed air is supplied from the container 12a to the heat medium channel 2 by the compressed air supply means 12 through the supply pipe 12b and the valve constituting the vent portion 15.

Then, the heat medium is fed from the heat medium channel 2 by the compressed air, flows through the pipe 5 (5a and 5b), and flows into the cold side tank 6 through the connection pipe 11 to be stored in the cold side tank 6.

Thus, the heat medium can be discharged from the plurality of solar heat collection devices 1 while the cold side tank 6 is not installed at a position lower than the solar heat collection device 1 and the cold side tank 6 can be economically installed.

Further, the heat medium which flows through the pipe 5 and the heat medium channel 2 is kept at a temperature in which the heat medium is not solidified, the flow rate of the heat medium is determined so that the heat medium is not solidified in consideration of the heat radiation amount from the pipe 5 and the heat medium channel 2, and the cold side tank 6 and the hot side tank 7 are kept warm.

Thus, it is possible to discharge the heat medium from the heat medium channel 2 of the solar heat collection device 1 by the compressed air in short time without solidifying the heat medium and to store the heat medium in the cold side tank 6 without solidifying the heat medium.

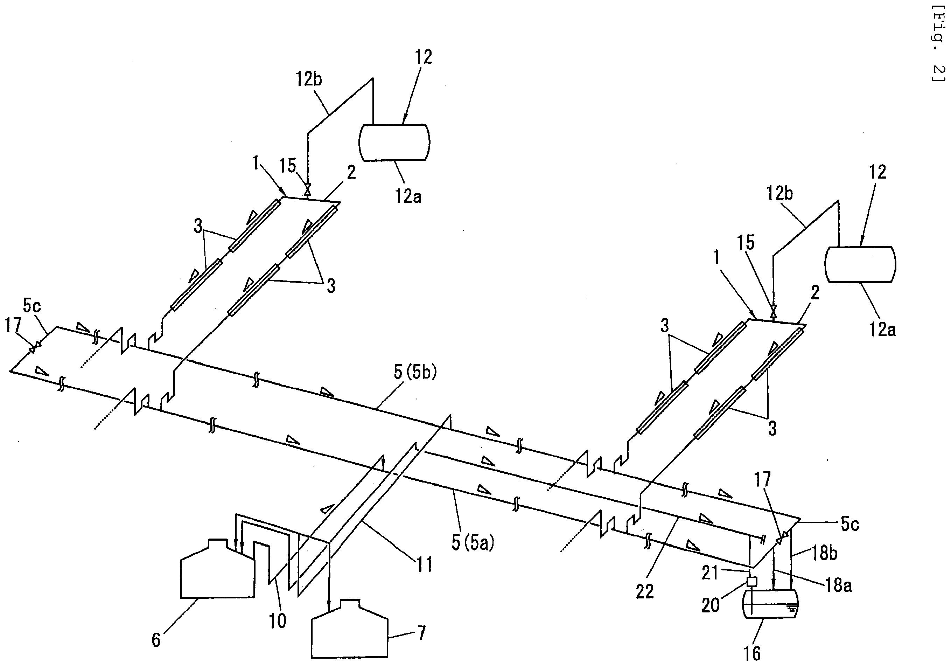

Fig. 2 illustrates a schematic configuration of a solar heat collection system including a heat-medium discharge device of a an embodiment of the invention. Since the heat-medium discharge device illustrated in this drawing is different from the heat-medium discharge device of the disclosure in that a drain container is provided and the pipe 5 is inclined, only this point will be described below. Here, the same reference numeral will be given to the same configuration as that of the disclosure and the description thereof will be omitted or simplified.

First, in the embodiment, the pipe 5 (5a and 5b) is inclined rightward and downward in Fig. 2. Thus, hereinafter, the pipe 5 (5a and 5b) will be referred to as the angled pipe 5 (5a and 5b). Additionally, in Fig. 1, a small right angled triangle indicates an inclination symbol and the heat medium channel 2 and the angled pipe 5 (5a and 5b) are inclined with respect to the horizontal plane in accordance with the inclination symbol.

Further, a drain container 16 is disposed at a position lower than the connection position of the heat medium channel 2 of the solar heat collection device 1 disposed at the lowest position among the plurality of solar heat collection devices 1 and the drain container 16 is connected to the angled pipe 5. Specifically, the drain container 16 is connected to the pipe 5c at the right end of the angled pipe 5.

The valve 17 is provided at the center portion of the pipe 5c, a portion of the pipe 5c near the angled pipe 5a in relation to the valve 17 is connected to the drain container 16 by a pipe 18a, and a portion of the pipe 5c near the angled pipe 5b in relation to the valve 17 is connected to the drain container 16 by a pipe 18b. Additionally, the valve 17 is normally closed.

Further, a valve (not illustrated) is provided at the connection portion between the pipe 18b and the pipe 5c. Then, when the valve is opened during the heat medium discharge operation, the heat medium which flows through the angled pipe 5b can be received in the drain container 16 through the pipe 5c and the pipe 18b. Further, the valve is closed during the normal operation in which the heat medium is not discharged from the solar heat collection device 1. Thus, it is possible to prevent the heated heat medium from flowing into the drain container 16.

Further, the heat medium which flows through the angled pipe 5a is normally fed to the drain container 16 by the pipes 5c and 18a.

Further, the heat-medium discharge device of the embodiment includes a pump 20 which feeds the heat medium from the drain container 16 to the cold side tank 6. A discharge pipe 21 is connected to the drain container 16 and the pump 20 is provided at a halfway position of the discharge pipe 21.

Meanwhile, a discharge pipe 22 is provided between the angled pipes 5a and 5b to be parallel to the angled pipes 5a and 5b and one end of the discharge pipe 22 is bent toward the cold side tank 6 and is connected to the cold side tank 6. Further, the other end of the discharge pipe 22 is connected to the discharge pipe 21.

Thus, the heat medium which is received in the drain container 16 is fed to the cold side tank 6 through the discharge pipes 21 and 22 by the pump 20 and is stored in the cold side tank 6.

In the solar heat collection system including the heat-medium discharge device with such a configuration, the heat medium is fed from the cold side tank 6 to the angled pipe 5a by a pump not illustrated in the drawings during the normal operation. Then, the heat medium is fed from the angled pipe 5a to the heat medium channel 2 of each solar heat collection device 1 and the heat medium which is heated by the solar ray passes through the connection pipe 11 from the angled pipe 5b so that the heat medium is stored in the hot side tank 7. The heat medium which is stored in the hot side tank 7 by a pipe (not illustrated) is fed to the power generation system and generates electric power by a turbine. The heat medium which is used to generate electric power and decreases in temperature is returned to the cold side tank 6 by a pipe (not illustrated) . Then, the heat medium is fed again from the cold side tank 6 to the angled pipe 5a through the connection pipe 10 by a pump (not illustrated) and the heat medium is heated by the solar heat collection device 1 as described above. Next, the heated heat medium is stored in the hot side tank 7. By such steps, electric power can be stably supplied.

Further, a part of the heat medium which flows through the angled pipe 5a is fed to the drain container 16 through the pipes 5c and 18a, is fed from the drain container 16 to the cold side tank 6 through the discharge pipes 21 and 22 by the pump 20, and is stored in the cold side tank 6.

Additionally, the heat medium may be fed from the drain container 16 to the cold side tank 6 through the discharge pipes 21 and 22 by the pressure of the pump (not illustrated) provided in the cold side tank 6 without the activation of the pump 20 during the normal operation. At this time, the drain container 16 and the cold side tank 6 are kept at a temperature in which the heat medium is not solidified. For this reason, the heat medium can be fed from the drain container 16 to the cold side tank 6 and can be stored in the cold side tank 6 while not being solidified.

Meanwhile, for example, when there is concern that the heat medium flowing through the heat medium channel 2 may be solidified due to a decrease in temperature thereof in a maintenance or power failure state, the heat medium is discharged from the heat medium channel 2 in this way.

First, the vent portion 15 provided at the highest position of the heat medium channel 2 of each solar heat collection device 1 is opened to introduce air into the heat medium channel 2 and the valve provided in the connection portion between the pipe 18b and the pipe 5c is opened to further supply compressed air to the heat medium channel 2 through the supply pipe 12b and the valve constituting the vent portion 15 by the compressed air supply means 12.

Then, the heat medium flows from the heat medium channel 2 of each solar heat collection device 1 into the angled pipe 5 (5a and 5b) by gravity and the pressure of the compressed air and the heat medium flows through the angled pipe 5 (5a and 5b) by gravity and the pressure of the compressed air to be received in the drain container 16 through the pipes 18a and 18b.

The heat medium which is received in the drain container 16 is fed to the cold side tank 6 through the discharge pipes 21 and 22 by the pump 20 and is stored in the cold side tank 6.

Thus, the heat medium can be discharged from the plurality of solar heat collection devices 1 by gravity and the pressure of the compressed air in short time while the cold side tank 6 is not installed at a position lower than the solar heat collection device 1 and the cold side tank 6 can be economically installed.

Further, the heat medium flowing through the angled pipe 5 and the heat medium channel 2 is kept at a temperature in which the heating medium is not solidified and the inside of the drain container 16 is kept at a temperature in which the heat medium received in the drain container 16 is not solidified. That is, the flow rate of the heat medium is determined so that the heat medium is not solidified in consideration of the heat radiation amount from the angled pipe 5 and the heat medium channel 2 and the cold side tank 6, the hot side tank 7, and the drain container 16 are kept warm.

Thus, it is possible to receive the heat medium from the heat medium channel 2 of the solar heat collection device 1 into the drain container 16 by gravity and the pressure of the compressed air in short time without solidifying the heat medium and to feed the heat medium from the drain container 16 to the cold side tank 6 so that the heat medium is stored in the cold side tank 6 while not being solidified therein.

Additionally, an embodiment of the invention has been described with the molten salt formed by the mixture of sodium nitrate and potassium nitrate being used as the heat medium, but the heat medium may be other molten salts or other liquid metals or solutions. Furthermore, the heat medium may be also oil.

### Reference Signs List

1: solar heat collection device
2: heat medium channel
5, 5a, 5b: pipe (angled pipe)
6: cold side tank (tank)
12: compressed air supply means
15: vent portion
16: drain container
20: pump

## Claims

1. A heat-medium discharge device for discharging a heat medium from a heat medium channel (2) of a solar heat collection device (1) including the heat medium channel (2), the heat-medium discharge device comprising:
a vent portion (15) which is provided at a highest position of the heat medium channel (2) and introduces air into the heat medium channel (2) when the heat medium is discharged;
compressed air supply means (12) which is provided in the heat medium channel (2) and supplies compressed air to the heat medium channel (2) when the heat medium is discharged;
an angled pipe (5, 5a, 5b) which is connected to the heat medium channel (2) and is inclined with respect to a horizontal plane;
a drain container (16) which is connected to a position lower than the connection portion of the heat medium channel (2) in the angled pipe (5, 5a, 5b) and receives the heat medium flowing from the heat medium channel through the angled pipe; and
a pump (20) which feeds the heat medium (2) from the drain container (16) to a tank (6),
wherein the heat medium is molten salt, liquid metal, solution, or oil.

2. A heat-medium discharge method of discharging a heat medium from a heat medium channel (2) of a solar heat collection device (1) including the heat medium channel (2), the heat-medium discharge method comprising:
introducing air into the heat medium channel (2) at a highest position of the heat medium channel and supplying compressed air to the heat medium channel (2) during a heat medium discharge operation so that a heat medium flows to an angled pipe (5, 5a, 5b) connected to the heat medium channel (2) and inclined with respect to a horizontal plane;
receiving the heat medium flowing through the angled pipe (5, 5a, 5b) in a drain container (16) connected to a position lower than the connection portion of the heat medium channel; and
feeding the heat medium from the drain container (16) to a tank (6) by a pump (20),
wherein the heat medium is molten salt, liquid metal, solution, or oil.

## Patentansprüche

1. Eine Heizmittelausgabevorrichtung für die Ausgabe eines Heizmittels aus einem Heizmittelkanal (2) einer Solarwärmesammelvorrichtung (1) umfassend den Heizmittelkanal (2), wobei die Heizmittelausgabevorrichtung aufweist:
einen Belüftungsabschnitt (15) der an der höchsten Position des Heizmittelkanals (2) bereitgestellt wird und Luft in den Heizmittelkanal (2) einbringt wenn das Heizmittel ausgegeben wird;
ein Druckluftversorgungsmittel (12), das in dem Heizmittelkanal (2) bereitgestellt wird und den Heizmittelkanal (2) mit Druckluft versorgt, wenn das Heizmittel ausgeben wird;
ein abgewinkeltes Rohr (5, 5a, 5b), das mit dem Heizmittelkanal (2) verbunden ist und in Bezug auf eine horizontale Ebene geneigt ist;
ein Ablaufcontainer (16) der an einer Position befestigt ist die niedriger ist als der Verbindungsabschnitt des Heizmittelkanals (2) in dem abgewinkelten Rohr (5, 5a, 5b) und das Heizmittel aufnimmt, das aus dem Heizmittelkanal durch das geneigte Rohr fließt; und
eine Pumpe (20) die das Heizmittel (2) aus dem Ablaufcontainer (16) zu einem Tank (6) fördert,
wobei das Heizmittel eine Salzschmelze, ein flüssiges Metall, eine Lösung oder ein Öl ist.

2. Ein Heizmittelausgabeverfahren zur Ausgabe eines Heizmittel aus einem Heizmittelkanal (2) einer Solarwärmesammelvorrichtung (1) umfassend den Heizmittelkanal (2), wobei das Heizmittelausgabeverfahren umfasst:
das Einbringen von Luft in den Heizmittelkanal (2) an der höchsten Stelle des Heizmittelkanals und die Versorgung des Heizmittelkanals (2) mit Druckluft während des Heizmittelausgabevorgangs, sodass ein Heizmittel zu einem abgewinkelten Rohr (5, 5a, 5b) fließt, das mit dem Heizmittelkanal (2) verbunden ist und in Bezug auf eine horizontale Ebene geneigt ist;
das Aufnehmen des Heizmittels, das durch das geneigte Rohr (5, 5a, 5b) in einen Ablaufcontainer (16) fließt, der an einer Position befestigt ist, die niedriger ist als der Verbindungsabschnitt des Heizmittelkanals; und
die Förderung des Heizmittels aus dem Ablaufcontainer (16) zu einem Tank (6) durch eine Pumpe (20),
wobei das Heizmittel eine Salzschmelze, ein flüssiges Metall, eine Lösung oder ein Öl ist.

## Revendications

1. Dispositif d'évacuation de milieu caloporteur permettant d'évacuer un milieu caloporteur d'un canal de milieu caloporteur (2) d'un dispositif de collecte de chaleur solaire (1) incluant le canal de milieu caloporteur (2), le dispositif d'évacuation de milieu caloporteur comprenant :
une portion de mise à l'air (15) qui est prévue à la position la plus haute du canal de milieu caloporteur (2) et introduit de l'air dans le canal de milieu caloporteur (2) lors de l'évacuation du milieu caloporteur ;
des moyens d'alimentation d'air comprimé (12) qui sont prévus dans le canal de milieu caloporteur (2) et fournissent de l'air comprimé au canal de milieu caloporteur (2) lors de l'évacuation du milieu caloporteur ;
un tuyau incliné (5, 5a, 5b) qui est raccordé au canal de milieu caloporteur (2) et qui est incliné par rapport à un plan horizontal ;
un récipient de vidange (16) qui est raccordé à une position plus basse que la portion de raccordement du canal de milieu caloporteur (2) dans le tuyau incliné (5, 5a, 5b) et reçoit le milieu caloporteur s'écoulant depuis le canal de milieu caloporteur à travers le tuyau incliné ; et
une pompe (20) qui alimente le milieu caloporteur (2) du récipient de vidange (16) dans un réservoir (6),
dans lequel le milieu caloporteur est un sel fondu, un métal liquide, une solution ou une huile.

2. Procédé d'évacuation de milieu caloporteur permettant d'évacuer un milieu caloporteur d'un canal de milieu caloporteur (2) d'un dispositif de collecte de chaleur solaire (1) incluant le canal de milieu caloporteur (2), le procédé d'évacuation de milieu caloporteur comprenant :
l'introduction d'air dans le canal de milieu caloporteur (2) à la position la plus haute du canal de milieu caloporteur et la fourniture d'air comprimé au canal de milieu caloporteur (2) au cours d'une opération d'évacuation de milieu caloporteur de sorte qu'un milieu caloporteur s'écoule vers un tuyau incliné (5, 5a, 5b) raccordé au canal de milieu caloporteur (2) et incliné par rapport à un plan horizontal ;
la réception du milieu caloporteur s'écoulant à travers le tuyau incliné (5, 5a, 5b) dans un récipient de vidange (16) raccordé à une position plus basse que la portion de raccordement du canal de milieu caloporteur ; et
l'alimentation du milieu caloporteur du récipient de vidange (16) dans un réservoir (6) par une pompe (20),
dans lequel le milieu caloporteur est un sel fondu, un métal liquide, une solution ou une huile.
